# EUROPEAN PATENT SPECIFICATION

(11) **EP 1 716 664 B1**
(45) Date of publication and mention of the grant of the patent: **08.04.2009**
(21) Application number: 04711579.5
(22) Date of filing: 17.02.2004
(51) Int. Cl.: H04L 12/18

(54) **PRESENCE AND MULTICAST/BROADCAST SERVICE**
PRÄSENZ- UND MEHRFACHSENDUNGS/RUNDSENDEDIENST
SERVICES DE PRESENCE ET DE MULTIDIFFUSION

(43) Date of publication of application: 02.11.2006
(73) Proprietor: TELEFONAKTIEBOLAGET LM ERICSSON (publ), 164 83 Stockholm (SE)
(72) Inventor: KELLER, Ralf, 52146 Würselen (DE); HUNDSCHEIDT, Frank, NL-6464 GC Kerkrade (NL); LOHMAR, Thorsten, 52074 Aachen (DE)
(74) Representative: Tonscheidt, Andreas
(86) International application number: PCT/EP2004/001458
(87) International publication number: WO 2005/078998

(56) References cited:
- WO-A-03/021838
- WO-A-03/044984

## Description

### Technical field of the invention

The present invention relates to a method, to a group presentity unit, to a consumer of group presence information and to a system integrating presence related information and multicast related information.

Especially the present application is applicable in a wireless packet-switched telecommunication network.

### Background

Multicast is a service that permits sources to send a single copy of the same data to an address that causes the data to be delivered to multiple recipients. Under multicast only one copy of a message passes over any link in a network and copies of the message are made only where paths diverge. From the network perspective, multicast dramatically reduces overall bandwidth consumption, since the data is replicated in the network at appropriate points rather than in the end-systems. Further a server, which is sending multicast message needs to manage only one session.

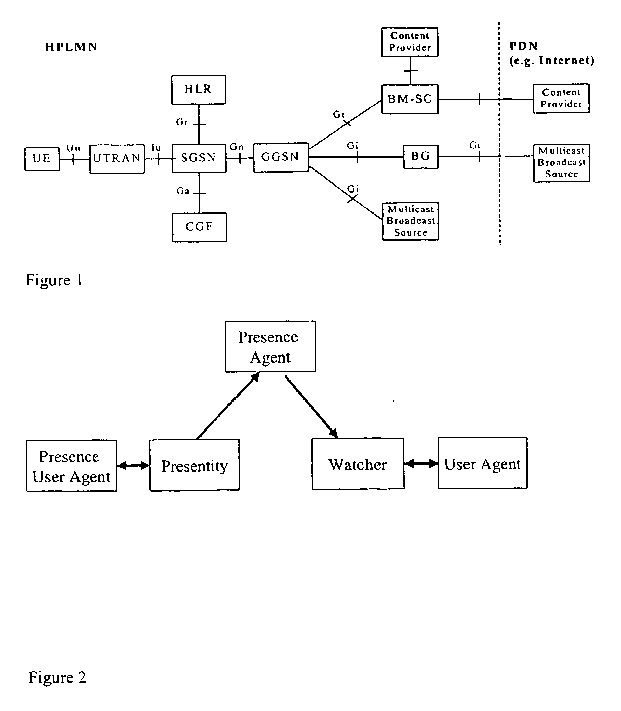

Multicasting in the internetworking between a fixed network and a mobile network like, General Packet Radio System GPRS or Universal Mobile Communication System UMTS is presented in the following according to the actual multimedia multicast/broadcast MBMS architecture of the General Packet Radio System GPRS network as depicted in figure 1.

The GPRS is the packet-switched enhancement of the Global System for Mobile Communication GSM, which is a circuit switched network. The user can be permanently online connected paying only for the real data transfer. In order to fulfil the new requirements some changes are introduced into the GSM, amongst other new logical nodes, the Serving GPRS Support Node (SGSN) and the Gateway GPRS Support Node (GGSN). The main functions of the GGSN involve interaction with external IP packet networks providing for example connections to Internet Service Providers ISPs. From the external IP network's point of view, the GGSN acts as a router for the IP addresses of all subscribers served by the GPRS networks. The GGSN also exchanges routing information with the external network. For the purpose of providing multicast/broadcast service the GGSN can communicate over the Gi interface with Broadcast/Multicast Service Centre MB-SC receiving a content from a Content Provider being located either in the mobile network or in the external network. Further possibility for providing multicast/broadcast is by means of a Multicast Broadcast Source, which can be located in the mobile network or in an external network. The SGSN serves all GPRS subscribers that are physically located within the geographical SGSN service area. It forwards incoming and outgoing IP packets addressed to or from a mobile station. Additional to the new logical nodes also new interfaces between the nodes are to be defined.

The similar nodes and interfaces are also used in the next generation of the wireless networks. In order to distinguish between the functionality of these nodes in UMTS extended names are often used, 3G-SGSN and 3G-GGSN. In the following description it will not be distinguished between the GPRS and UMTS nodes.

The introduction of multicast into wireless network has to deal with problems being relevant for the mobile networks, amongst other with the mobility of the end users and low transmission bandwidth of the mobile network on the air interface.

In WO 03/021838 it a solution is disclosed for provision of information needed for optimizing multicast transmission in a wireless telecommunication system. In particular a Multicast Database, MC database, is described containing information about multicast groups, their subscribers and optionally about additional multicast related information like for example Quality of Service or security. Further D1 discloses interfaces for information exchanges between the MC database and HLR and between MC database and network nodes like GGSN and SGSN. According to the received information an optimization of the multicast transmission from a multicast server is performed. Thus this document deals with the problem of multicast optimization on a transmission layer.

In particular the mobility of the users has impact on different development directions. For example currently services are developed providing location information to the users interested thereto.

Cellular networks have information about the location of the user. In the simplest case this can be the identification of a cell, the so-called cellID, which can be mapped to geographical coordinates. Since the information provided by cellID is not accurate enough, enhancements have been proposed based on various technologies, like for example Global Positioning System GPS or triangular measurements. The location information of subscribers can be used by so-called location based services. If a user requests a location-based service from a server, then the location is retrieved by the server from the mobile location centre and the server provides the service, which is based on the location information, to the user. However it is not foreseen that a user communicates directly with the mobile location centre. Furthermore although the information is present in the mobile network it is not provided to the other subscribers.

A so-called presence is another parameter used in the mobile networks in particular for conferencing purpose. Presence is a service that allows a user to control the dissemination of the presence information to other users and services. Presence information may convoy various type of information such as the user's willingness to engage in some types of communication with other users, the location, the capabilities of the users devices to handle different media types. The simplest form of the presence service is the provision of information about the presence of an individual user, it means information whether the subscriber can receive and send information. The presence service is implemented in a presence server and the signalling is based on a Session Initiation Protocol SIP. There are other implementations of presence services and SIP is merely an example.

Several forums have realized that the user will most benefit from presence if presence enables global communication.
They have started efforts to define standards that may support the proliferation of interoperating services. The IETF has started working on presence and instant messaging with the aim of defining Internet standard protocols. SIMPLE is an application level protocol defined as a SIP extension for the support of presence functionality in the Internet specifying how providers and consumers of presence information interact securely through a network. The SIMPLE inherits basic SIP mechanisms and capabilities such as, routing and authentication. It supports both server-based and peer-to-peer architectures and migration of presence responsibility between SIP nodes.

In the following the present SIMPLE model of presence unit according to figure 2 is described.

Basically five roles can be distinguished within a presence unit according to the SIMPLE model, presence user agent, presentity, presence agent, watcher and user agent of the consumer of presence info wherein said roles can be grouped into three logical roles, producer of presence information, consumer of presence information and presence agent. The information flow from the presentity via presence agent to the watcher is performed by means of presence protocol, like for example extended SIP.

First, the entity about which presence information is published is called the presentity. This is a software representation of the user's equipment, a physical entity working outside the presence system and which uses the presence system to publish its presence information through the presentity. The user manipulates the presence information through a Presence User Agent (PUA) and as a result of the action the associated presentity generates a presence data record containing a component of the complete presence information. A user may manipulate its presence information through multiple Presence User Agents, which may generate or update parts of or the entire presence information. For example, a user owning multiple devices may manipulate her presence information from any of them.

Next, the watcher is the entity requesting presence information about the presentity. As it is the case for the presentity, the watcher represents the user, which uses the presence system to access presence information of his own presentity or of an other users presentity. A user that subscribes to presence information is called a watcher. The presence information shall indicate to the watcher whether the presentity is available, unavailable, or busy. Finally, the Presence Agent mediates the interaction between the presentity and the watcher. A Presence Agent is any SIP user agent able to process requests related to presence and to generate notifications of change in the presence information. There may be several Presence Agents handling presence related requests for a given presentity, however, SIMPLE requires that any such Presence Agent has complete knowledge of the presence state of the presentity. A Presence Server is any SIP entity residing in the network that can act as a Presence Agent or as a proxy for presence related requests.

A presentity controls who is authorized to subscribe to its presence information. An unauthorized watcher shall always get an unavailable indication. A watcher is authorized by applying rules defined by the presentity's access lists. For example an authorized watcher shall get an available indication if the presentity is registered and does not have do-not-disturb active. Further examples are an unavailable indication if the presentity is not registered or a busy indication if the presentity has do-not-disturb active.

A further example of the presence service is the so-called buddy-list. It includes a list of users grouped into one list by having for example the same interest or being friends. When an event occur the members of the list being alive, it means being attached to the network, receive a certain message about the event.

The communication in a mobile communication networks like for example in UMTS is performed by means of a unicast communication. The unicast communication is also called point-to-point communication. The point-to-point communication means the sending of a message from a single sender to a single receiver. The group communication is implemented by means of a point-to-point communication having a sender transmitting separately packets to each of the members of the group. For a group with n members, n packets are required on the whole way between the sender and the receivers. This is also the transmission method for providing the location and presence service. Therefore in order to send a message to the active members of the buddy list, it is required that every user has established a connection to the network.

The presence related services were developed for a single user. It means the existing UMTS technology does not foresee the utilisation of multicasting for the presence related services. Any service that is simultaneously provided to multiple clients is replicated and multiple unicast connections are used towards the users. Especially with the evolution of resources high-demanding streaming or conversational multimedia services this implies that the resources in the network are used very inefficiently. Further the developed protocols providing the presence-related service, like the SIMPLE protocol, do not provide service applicable for a multicast group, so that the multicast group member do not have any presence-related information about the multicast group.

Therefore currently there is no integration between the multicast and the presence-related service.

### Summary and description of the invention

It is an object of the present invention to provide an efficient solution for integration of presence-related information with multicast transmission within a telecommunication network.

The invention is embodied in claims 1 and 12. Advantageous embodiments are described in the dependent claims.

The basic idea of the present invention is to integrate presence and multicast related information in a telecommunication network. It is to be mentioned that the term multicast refers to any point-to-multipoint transmission. Therefore broadcast transmission, being regarded as a special form of the multicast transmission is also included under the term multicast. The telecommunication network has a multicast server providing multicast transmission based on multicast related information to users registered to a multicast group. Said provision of multicast related information and the multicast transmission is performed on a first protocol layer, for example using an MBMS bearer in a 3G mobile. Further the telecommunication network has a presence network part for performing presence related operation based on user presence information to the users wherein the presence related operation is performed on a second protocol layer, for example using a presence protocol defined as an extension of the Session Initiation Protocol (SIP). The integration of the multicast and presence related information is realised by providing a group presentity unit. The group presentity unit is introduced providing group presence information about the multicast group. The group presence information is updated by the presence network part, which provides user presence information to the group presentity unit for updating the group presence information. On the other side the multicast server updates the group presence information about the multicast group when an update occurred in the multicast group. Further it is proposed to provide the group presence information about the multicast group to the multicast server in order to optimize the multicast on the first protocol layer. For example according to the information about users being present members of a multicast group a decision can be made whether to use multicast or unicast transmission. Further the group presence information about the multicast group is provided to the presence network part in order to optimize presence related operations performed on the second protocol layer. For example according to the information a decision is to be made to distribute information only to the users being present members of a multicast group and of a buddy list.

Further it is proposed that the group presence information includes information related in some way to the possibility to reach the multicast group. It means the group presence information can include users presence information and/or information about location of the multicast group and/or status of the multicast group and/or availability of the multicast group or users being members of the multicast group and/or access authorization and/or number of present group users, and/or distance between the present group members and/or membership of the users to a buddy list. These are merely examples for attributes of the group presence information.

Further it is proposed in one embodiment of the present invention to subdivide the functionality of the group presentity unit into a first functionality responsible for producing and gathering the group presence information and in a further functionality providing and administrating the group presence information. According to the SIMPLE model the first function is performed by presence group agent and the further functionality by the group presentity. In this case a consumer of the presence information contacts the group presentity in order to retrieve data. Preferably it is to provide an additional central unit for gathering and providing the group presence information. In the SIMPLE model the presence agent is responsible for this task.

The present invention proposes to have a consumer of the group presence information communicating with the group presentity unit in order to use the requested information. Eventually, depending on the system, the request goes via a presence agent. There are different ways for the consumer to request the group presence information. For example in the SIMPLE model the group watcher being part of the consumer of the group presence information, subscribes and registers for event based information, it means when a changes occurs the group watcher is informed. The group watcher forwards the received information to the group agent using it.

It is advantageous that the multicast server is simultaneously the consumer of the group presence information. For this purpose the multicast server has to subscribe to the group presentity unit in order to become a group watcher with the aim to receive the group presence information. The advantage of this solution is that the multicast server can react in case changes occur in the aspect of the presence of the users being also multicast group members. Of course there can be more than one multicast server being in contact with the group presentity unit.

Further it is also proposed that users subscribe and register to become group watcher, for the same purpose as described above to become consumer of the group presence information. In this context the access permission are to be checked eventually. By means of administration it can be set who is allowed to access the group presence information.

It is proposed that the multicast server initiates the group presentity unit for a multicast group. The advantage is that the multicast server controls the group presentity unit and initiates one, when it is required, for example when a new group is established.

As an alternative it is proposed that the group presentity is initiated for example by network operator or by some kind of administration network part. In this case it is required that the availability of the group presence unit is distributed to the potential consumers of the group presence information.

In order to provide precise location information it is proposed to have a communication interface with a location database having detailed information about the current location of a user, like for example a mobile location server in a mobile network.

It is advantageous to administrate counters in the group presentity unit for tracking changes and current states in the group presence information.

Further it is proposed to have a method performing the following steps. The multicast server initiates the group presentity and it produces and updates the group presence information by altering the group presence information at the group presentity unit when a user sends a join or leave request to or from a multicast group. The consumer of the group presence information registers itself at the presence agent and subscribes to required event based information. With this steps it is not required that the consumer keeps track on changes in the group presence information, but notifications about an event to group presentity unit and/or to the consumer of the group presence are sent. This model can be extended by a central unit, namely the presence agent. In this case the producer and the consumer of the group presence information register to the group agent and the group agent sends notification to these entities.

Further it is proposed to have a group presentity unit adapted to integrate presence and multicast related information in a telecommunication network. Said telecommunication network has a multicast server providing multicast transmission based on multicast related information to users registered to a multicast group wherein the multicast transmission is performed on a first protocol layer, e.g. using an MBMS bearer in a 3G mobile and having a presence network part for performing presence related operation based on user presence information to the users wherein the presence related operation is performed on a second protocol layer, e.g., using a presence protocol defined as an extension of the Session Initiation Protocol (SIP). Said group presentity unit has group presence information about the multicast group. The updating means is responsible for the update of the group presence information, wherein the updating means receive the actual data by means of a first interface and of a second interface. The first interface is adapted to communicate with the presence network part in order to receive user presence information. It means on one side it is updated by the user presence information available on the second protocol layer. On the other side the group presentity unit receives information from the multicast server having multicast related information and being located in the first protocol layer. It means the group presence information is updated when a change occurs at the presence information of a user or when the multicast related information has changed due to an event in which a user joins or leaves a multicast group.

It is proposed that the structure of the group presentity unit has a first entity for producing and gathering the group presence information and a further entity for providing and administrating the group presence information. According to the SIMPLE model the first entity is the presence group agent and the further entity is the group presentity. In this case a consumer of the presence information contacts the group presentity in order to retrieve data. Preferably it is to provide an additional central unit for gathering and providing the group presence information. In the SIMPLE model the presence agent is responsible for this task.

In one embodiment of the present invention the first and the further entity are located in a same network node. It is also possible to have both entities implemented in different network nodes, as it is made in the SIMPLE model.

Further it is proposed to have a consumer of the group presence information. Said consumer is adapted to use the integrated presence and multicast related information in a telecommunication network with the above disclosed features. The consumer has an access interface for accessing the group presentity unit with the above-described features in order to use said information. According to the SIMPLE model the group watcher and the group agent build the consumer, wherein by means of the group watcher, the group agent is registered and subscribed to receive information in case some changes occur in the group presence information.

It is proposed that a multicast server is the consumer of the group presence information.

In other embodiment a user being registered and subscribed by means of a group watcher is the consumer of the group presence information.

Further it is proposed to have a system being adapted to perform the method according to claim 1 and said system has a group presentity unit according to claim 12 and a consumer according to claim 15.

The present invention proposes to introduce presentity representing a group of users and not a single user. This new type of presentity is called group presentity unit. Further the present invention proposes to introduce interfaces between the multicast server, the group presentity unit and the presence network part to exchange the information between the nodes in order to link the independent protocol layers, namely the multicast layer and the presence layer. The presence network part can include a presence server and a location database.

The present invention insure that the available presence information, wherein the presence information can include the information made available by the location and/or by the presence services, is linked to the group membership information provided by multicast service, like for example by the Broadcast/Multicast Service provided by the Broadcast/Multicast Service Center BM-SC. Thus a user can have location information stored in the network, can have an entry in the presence database and can be registered in the group management database, according to the present invention this sort of information is linked. The advantage of the present invention is that certain actions are triggered by the information available in different databases. Further advantage is that the radio resources are utilized more efficiently, because for example it is prevented to multicast a message to users, who are not present. It is also advantageous due to the maintenance issue, because instead of instantiating and maintaining n users presentities because each presentity represents a single user, only one group presentity for n users is to be maintained.

With the proposed solution an optimised multicast in a telecommunication network is achieved since group presence related information could be included in the decisions about multicast transmission. The term group presence information is to be understood as information describing the possibility to reach the multicast group. Said information can include presence and location related information and the status and the availability of a group.

In the following a detailed description of the invention is given.
Fig.1: Multimedia Broadcast/Multicast Service architecture.
Fig.2: SIMPLE presence model according to the state of the art.
Fig.3: SIMPLE presence model according to the present invention.
Fig.4: Embodiment of the present invention showing the interaction of different databases.
Fig.5: Embodiment of the present invention involving a multicast server.
Fig.6: Embodiment of the present invention showing messages exchange between nodes.

The description of the possible technical realisation of the present invention is described in the following.

The present invention proposes to introduce a group presentity unit representing the group of users and interfaces between the involved nodes. The architecture of the group presentity unit (meaning the division of the tasks amongst different nodes and the required interfaces between the nodes) can vary depending on the implementation of a system. The users may subscribe to group presence information in the same way as to single user presence information. However, also services and service centers like the BM-SC may subscribe to group presence information.

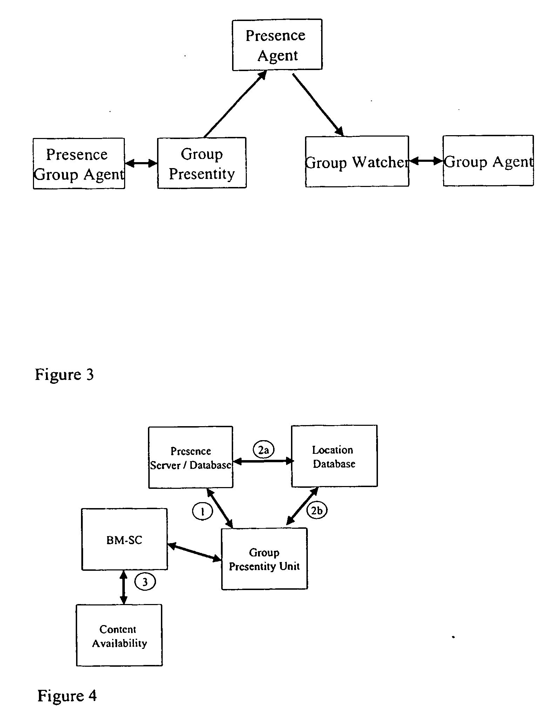

In the following the invention is described in respect to figure 3, which depicts the adapted SIMPLE presence model according to the present invention. Said adapted SIMPLE presence model includes group presentity communicating on one side with a presence group agent and on the other side with a presence agent. The presence agent sends information to a group watcher being together with the group agent the consumer of the presence information. Within the adapted SIMPLE model the group presentity, the presence group agent and the presence agent build the group presentity unit. Of course also other entities aggregation could represents a group presence unit. For example the group presentity could also provide the group presence information to the group watcher, in this case the presence agent is not required. Also it is not required to have presence group agent as a standalone entity. Anyhow since in the SIMPLE model the group presentity fulfils the tasks of gathering and administrating the group presence information, the following description concentrates on this entity.

The group presentity is an entity, which is responsible for administrating and publishing group presence information, like for example of a multicast group. The group presence information can be manipulated through a Presence Group Agent and as a result of the action the associated group presentity generates the complete group presence information. Besides the group presentity unit there is also a group watcher entity consisting of a group agent and a group watcher. The group watcher is the entity requesting the group presence information about, wherein the group watcher may watch a group presentity like a single user presentity, but it needs to understand the different notion. The group watcher represents the multicast group management unit, which uses the group presence unit to access presence information. The presence information shall indicate to the watcher whether the presentity is available, unavailable, or busy. The group presentity controls the authorisation to subscribe to the group presence information. An unauthorized group watcher shall always get an unavailable indication. A group watcher is authorized by applying rules defined by the group presentity's access lists. Finally, the Presence Group Agent mediates the interaction between the group presentity and the group watcher.

In order to improve the multicast transmission and in order to provide the relevant information about a multicast group, the group presence maintains the following group presence related information, wherein these list includes merely examples and therefore it is not to be seen as complete. Important information is the location of the group. Hereby the hierarchical order can be considered distinguishing for example between the cells in which the users being multicast group members are located. The location can be also distinguished considering the countries. Further example for group presence related information is the status of the group, it means it can be indicated that a group is currently busy due to the data delivery ongoing status. The availability is a parameter indicating whether it is possible to send data to the users. The group presentity can also maintain information about the access authorisation, which control the permission of the users to subscribe to group presence information. Further the number of the users being registered to a multicast group, the so-called present group members can be controlled. The administration of the users can be based on the number of user in total or per location or per access technology. The group related presence information is to be used to make different decisions for example whether to utilize the multicast technique to transmit the data to the present group members or whether it is more efficient to decide to use unicast connection to every present user. This kind of decision can be also made on the information about the minimum, maximum or average distance between the present group members.

In the description above the SIMPLE presence model modified according to the present invention is described. In the following the integration of a multicast server into a presence model is described in more details. A multicast server is a node providing the multicast transmission to the users, wherein the provision of the multicast transmission includes the provision of the multicast information as such but also the multicast management task. Of course also a separate node can be adapted to perform the multicast management task. This solution is advantageous in hybrid networks, in which the multicast information is provided in one network, for example the Internet and the multicast management task in other network, for example in a wireless network, like GPRS or UMTS. In the example of GPRS and UMTS the so-called Broadcast/Multicast Service Center BM-SC fulfils the multicast management task.

However the utilization of the BM-SC is merely an example and therefore any other node performing a group management task can be used in an adapted manner. Further in the following the multicast service is used as an example. However the present application is also applicable for the broadcast service.

The BM-SC initiates the group presentity for each multicast group. The decision about the initiation of a multicast group can be decided by the group owner or by the operator via a management interface or even by the users. Another option is to regard the group presentity as a logical group where users register, it means any group which is maintained by the group management has at the same time a group presentity, and the logic in the BM-SC ensures the consistency of the managed data. This implies that the information about the existence of logical group presentity even when the group is empty is to be announced to the potential group members. The announcement can be performed via phone, SAP, web page, or any other means. During the initiation phase different group characteristics can be defined. For example it can be specified, that the multicast group is a closed group meaning that only the assigned users are allowed to register to the group presentity. The permission to register to the group presentity can be specified via management interface, which is to be defined consequently.

The introduction of additional logic and interfaces in order to use the available information at location, presence database and at multicast/broadcast service is depicts in figure 4.

The figure 4 shows a BM-SC, a presence server/database, location database being connected to the group presence unit. Additionally there is the content availability being connected to the BM-SC.

In order to have precise data the group presence unit communicates via the interfaces 1 with the presence server/database, which is a network presence part having presence information about a user, wherein the presence server/database receives the information about the user directly from the user or said information can be supplemented by the information received from the location server via the interface 2a. The location information received over 2a interface is sufficient with regard to granularity. In case a finer granularity is required, this is achieved by means of the 2b interface providing a direct access from the group presence unit to the location database. However the level of the granularity does not have any impact on the present invention.

The BM-SC provides the group presence unit with multicast related information, like for example about the existing multicast group and the users being members of the multicast groups. In addition to the stated information the BM-SC can be also aware of which content is available for the requested distribution. This is done via the interface 3 to the content availability, which can be located in content server. At a certain stage the BM-SC knows the connectivity status of the individual MBMS group members that are served by itself, because group members subscribe to the first layer.

In the following an embodiment of the present invention showing the impact of the registration of a user is described in more details.
The registration of an interested user, independent whether the group presentity is closed or not, can be done by specifying the multicast address of the multicast group during the registration for the presence service. According to the SIMPLE model this is to be done during the SIMPLE registration by means of a certain entry in the presence database.

In the next step the presence of the users to a group presence is to be indicated to the network. Therefore either the users can indicate their presence or it can be initiated automatically after the registration procedure is closed. The information about the user membership to a group presence is stored in the group presentity and can then be used, amongst others, to determine whether multicast/broadcast or unicast shall be applied to provide content. The group presence information are used in order to optimise the multicast transmission on the first layer it means on the transmission layer and further also in order to optimise the presence related operations on the second layer on which currently the user presence information are applied. In the following some examples are presented showing the improvements on the different layers, which are to be achieved by using the group presence information. For example the group presence information can track the information about the number of users being present in a multicast group. According to the percentage of present users being multicast group members a decision can be met whether to use multicast or unicast transmission. The group presence information can be further specified and the location of the present users can be considered. For example if at least a certain number of users located in a cell or in a predefined area are subscribed to the same multicast group (wherein several multicast groups for the same content but with different QoS characteristics may exist) then the multicast transmission is to be used, otherwise the unicast is the preferable kind of data transmission. Further the distance between the users can be taken into consideration by deciding whether to use multicast or unicast. It means it can be examined whether the average distance between the users in the multicast group does not exceed a certain value. It means if they are within the coverage of cells in close vicinity, then it is preferably to use multicast to the users to provide the content otherwise unicast is used. The optimisation of the multicast transmission means also choosing broadcast transmission when appropriate. Therefore if a broadcast bearer is available, then all terminals within the broadcast coverage area, which are capable to receive said broadcast bearer, should use it.

Furthermore on the basis of the group presence information the presence related operations are to be optimized. For example if a certain number of group participants are on one and the same buddy list, the decision could be to adapt the charging, for example a lower price for buddy owner or for all participants. Further example for optimised presence related operation is the decision to inform all on a buddy list about a multicast group, when a user being on a buddy list is also a member of a multicast group. Optionally the user sets the option that to join the user automatically to the multicast group. Further the option can be set that when a number of users being on a buddy list and being present reaches a threshold value than these user are to be set in one group to receive the same content or to share the same information. Optionally the content type and the usefulness of multicast or broadcast transmission for that content type are considered for this decision, because certain content may have a considerable decrease of quality when using multicast or broadcast bearers.

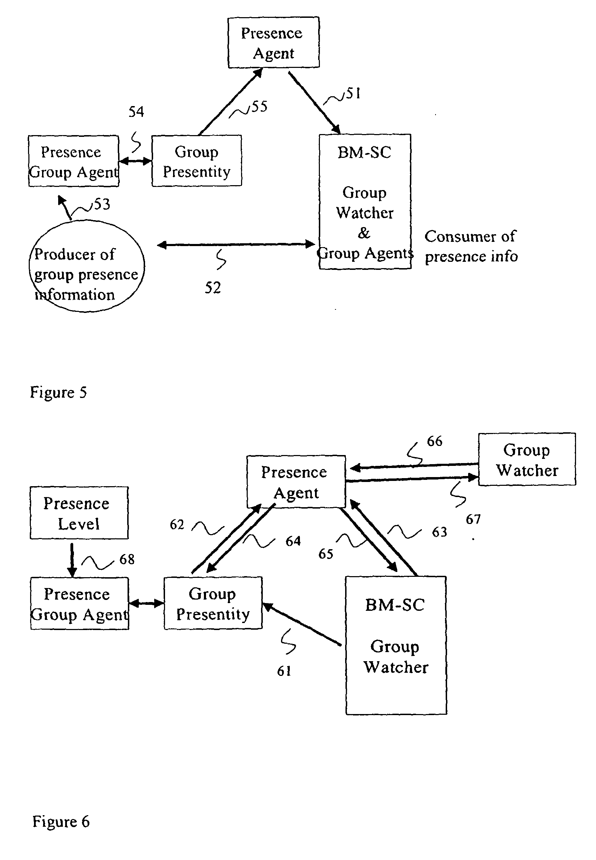

In the following an embodiment of the present invention in respect to figure 5 is presented, in which a multicast server, like for example the BM-SC is also a consumer unit of the presence information. The embodiment is described on the basis of the SIMPLE model as an example.

The figure 5 depicts an embodiment of the present invention, in which the BM-SC delivers information to the producer of the group presence information and simultaneously the BM-SC is the consumer of the presence information. In figure 5 it is shown that on one side the BM-SC communicates with the producer 52 in order to send multicast related information and on the other side there is information flow from the presence agent to the BM-SC 51, when an event occurs to which the BM-SC has registered and subscribed. The producer delivers the group presence information to the group presence agent 53, which communicates with the group presentity 54. Said group presentity informs the group agent about occurring changes 55. The presence agent is a central unit collecting the presence related information and triggering the distribution of the information when an entry in the group presence information changes.

For the purpose of being the consumer of the group presence information, the BM-SC instantiates, as depicted in figure 5, both Group Watcher and the corresponding Group Agents. Thereby the BM-SC can inform the Group Presentity by sending the group related information but also it can use the information received from the Presence Agent.

In the following in respect to figure 6 the various steps are described, with which the BM-SC achieves to become the consumer and partly the producer of the group presence information. The nodes correspond to the nodes from figure 5.

First, the BM-SC initiates the group presentity 61. Preferably this is done after the first subscriber joins a particular multicast group, however, it can also be initiated beforehand. The group presentity and the corresponding presence group agent may also be co-located in the BM-SC. However, since potentially a huge number of users may interact with the group presentities, it might be beneficial to use a dedicated node for this purpose. Each join and leave request from a subscriber alters the data in the group presentity, respectively the number of group member is increased or decreased. By means of this interaction the BM-SC becomes the producer of the group presence information.

In the next step 62 the group presentity registers itself at the presence agent. In order to be informed about changes the group presentity subscribes 62 to the required events. The BM-SC is responsible for the initiation of a Group Watcher, which registers itself also at the Presence Agent 63 and subscribes 63 to required events. The Presence Agent then sends notifications, when an event occurs to one of or both the Group Presentity and the BM-SC, 64, 65.

It is quite natural to have group watcher and group agent for each multicast group instantiated in the BM-SC, since the BM-SC needs to maintain databases for multicast subscribers anyway. Users may also have watchers and user-agents implemented on their terminals. This is also performed by the means of the registration/subscription 66 procedure and the corresponding notification received from the presence agent 67.

In an embodiment of the present invention in the group presentity a variety of counters are implemented in order to keep track on the changes regarding the users being members of a multicast group and their presence in the network. In the following a few examples for the counters are presented. The group presentity has a counter about the number of multicast group members, wherein this input can be delivered from the BM-SC, when a user joins or leaves the multicast group. Respectively the presence agent delivers information about the presence of users in order to update the counter about the number of present group members, when a user becomes present or when the status changes to not present. Further there the number of users being interested for a particular content can be monitored by means of a counter.

The information about the changes for the counter is to be received from the BM-SC, for example when a user declares to be interested in a particular content. A similar counter can be maintained for the number of users being multicast group members and being on a particular buddy list, wherein the Presence Agent sends a notification in case of changes. It means the number of group members on a particular buddy list increases when a user of a particular buddy list becomes present and decreases when the users is not longer present. Further a counter can be maintained about the number of group members in a particular area, wherein the number changes if a user enters or leaves a particular area. Since the presence agent has this information being included in the presence information of each user, therefore the presence agent is able to modify the corresponding counter's entry. Further the BM-SC can update the information in the counter about the number of group members with a particular access like for example GSM, WCDMA. The number of group members per access can be determined either when the presence entity has identified the access type or it can be determined considering the cell Id provided during the presence registration procedure. In addition, a Group Presentity may implement the information about the minimal, maximal and the average distance between the group members, wherein eventual the combination with location information is required.

Further it is proposed to define a certain presence level 68 for each counter. The above-presented counters are to be used in order to trigger an action in case a counter increases or decreases above a certain presence level. This information can be set by means of a management interface, wherein it is to be triggered either by a specific user or by the operator or by the BM-SC. Said presence level is to be defined as one single and absolute value or as a hysterese, which is the preferred solution.

In the following a few examples describing the impact of the certain presence level on the event triggering are presented. For example it can be decided to use either multicast or unicast when a number of present group members is above a threshold value representing a certain presence value. The same decision can be made when the number of present group members in a particular area is above a threshold value, then it is preferably to use multicast to these users, eventually by creating a new multicast group and for the users outside said area, it could be more efficient to use unicast. Further if the number of present group members on a particular body is above a threshold value, then it is to be decided whether to send an invitation to all members of said body list. A threshold value can be also set for the announcement of service, meaning that the users are informed about the service ability when a value is reached and the users are asked to join the group. The decision to join can be refined that only the subscriber being present should join and respectively leave the group when they are not present. Further the initiation of a session can be made dependent on the information whether enough users are present and adequately if the counter decreases below the presence level, the session is stopped. Also the charging for information can depend on the counter, for example the charging record generation in the BM-SC is adapted in the manner that a lower tariff is offered for content which is of high interest in a particular area or for buddies on a list.

The above described embodiments of the present invention are based on the SIMPLE model. However the applicability of the present invention is not restricted to said model. The invention works for every system having presence information (wherein said information includes also location information) and multicast related information located on a different layers and not being integrated.

## Claims

1. Method for integrating user presence information and multicast information in a mobile telecommunication network having a multicast server providing multicast transmission based on multicast information to users registered to a multicast group wherein the multicast transmission is performed on a first protocol layer and wherein the multicast information comprises information about the existence of the multicast groups and their users, and having a presence network part for performing presence operation based on user presence information comprising information, whether a user can send and receive information, wherein the presence operation is performed on a second protocol layer, which is an application layer wherein the application layer is different from the first protocol layer
- integrating in a group presentity unit the multicast information provided by the multicast server and the user presence information provided by the presence network part into group presence information providing information about reachability of the multicast group and,
- receiving from the presence network part user presence information in the group presentity unit for updating the group presence information and,
- receiving from the multicast server multicast information in the group presentity unit for updating the group presence information and,
**characterised by**
- providing the group presence information about the multicast group to the multicast server for optimising the transmission on the first protocol layer by deciding whether to use multicast or unicast transmission to a plurality of present users of the multicast group and,
- providing the group presence information about the multicast group to the presence network part for optimising presence operations performed on the second protocol layer.

2. Method according to claim 1 **characterized in that** the group presence information includes information related to the availability of the multicast group.

3. Method according to claim 1 or 2 **characterized in that** the functionality of the group presentity unit is subdivided into a first functionality responsible for producing and gathering the group presence information and in a further functionality providing and administrating the group presence information.

4. Method according to one of the claims 1 to 3 **characterized in that** a consumer unit of the group presence information communicates with the group presentity unit in order to use said information.

5. Method according to one of the preceding claims **characterized in that** the multicast server is a consumer unit of the group presence information.

6. Method according to one of the claims 1 to 4 **characterized in that** a user being registered and subscribed by means of a group watcher is a consumer unit of the group presence information.

7. Method according to one of the claims 1 to 6 **characterized in that** a multicast server initiates the group presentity unit for a multicast group.

8. Method according to one of the claims 1 to 6 **characterized in that** the group presentity unit is initiated and its availability is distributed to the users.

9. Method according to one of the claims 1 to 8 **characterized in that** a location database of the users communicates with the group presentity unit in order to provide precise location information.

10. Method according to one of the claims 1 to 9 **characterized in that** the group presentity unit administrates counters for tracking changes in the group presence information.

11. Method according to one of the claims 1 to 10
**characterized in that** the following steps are performed
- the multicast server initiates the group presentity unit,
- the multicast server updates the group presence information by altering the group presence information at the group presentity unit when a join or leave request of a user to or from a multicast group is performed,
- the group presentity unit registers itself at a presence agent,
- the consumer unit of the group presence information registers itself at the presence agent and subscribes to required event based information
- the presence agent sends notifications to group presentity unit and/or to the consumer of the group presence.

12. Group presentity unit adapted to integrate user presence information and multicast information in a mobile telecommunication network having a multicast server providing multicast transmission based on multicast information to users registered to a multicast group wherein the multicast transmission is performed on a first protocol, and wherein the multicast information comprises information about the existence of the multicast groups and their users and having a presence network part adapted to perform presence operation based on user presence information comprising information, whether a user can send and receive information, wherein the presence operation is performed on a second protocol layer, which is an application layer wherein the application layer is different from the first protocol layer
the group presentity unit providing group presence information about the reachability of the multicast group and being adapted to integrate the multicast information and the user presence information with
- a first interface adapted to receive user presence information from the presence network part and,
- a second interface adapted to receive multicast information from the multicast server and,
- updating means adapted to use the received information to keep the group presence information updated, **characterized in that**
- said group presentity unit is adapted to provide the group presence information about the multicast group to the multicast server for optimising the transmission on the first protocol layer by deciding whether to use multicast or unicast transmission to a plurality of present users of the multicast group and,
- wherein said group presentity unit is adapted to provide the group presence information about the multicast group to the presence network part for optimising presence operations performed on the second protocol layer.

13. Group presentity unit according to claim 12 **characterized in that** said group presentity unit has a first entity for producing and gathering the group presence information and a further entity for providing and administrating the group presence information.

14. Group presentity unit according to claim 12 or 13 **characterized in that** the first and the further entity are either located in a same network node or in different network nodes.

## Patentansprüche

1. Verfahren zum Integrieren von Benutzeranwesenheitsinformationen und Multicast-Informationen in einem Mobiltelekommunikationsnetz mit einem Multicast-Server, der eine Multicast-Übertragung auf der Basis von Multicast-Informationen an Benutzer bereitstellt, die in einer Multicast-Gruppe registriert sind, wobei die Multicast-Übertragung auf einer ersten Protokollschicht durchgeführt wird und wobei die Multicast-Informationen Informationen über das Bestehen der Multicast-Gruppen und ihrer Benutzer umfassen, und mit einem Anwesenheitsnetzteil zum Ausführen einer Anwesenheitsoperation auf der Basis von Benutzeranwesenheitsinformationen, die Informationen umfassen, ob ein Benutzer Informationen senden und empfangen kann, wobei die Anwesenheitsoperation auf einer zweiten Protokollschicht ausgeführt wird, die eine Anwendungsschicht ist, wobei sich die Anwendungsschicht von der ersten Protokollschicht unterscheidet,
- Integrieren in einer Gruppenanwesenheitseinheit der Multicast-Informationen, die durch den Multicast-Server bereitgestellt werden, und der Benutzeranwesenheitsinformationen, die durch den Anwesenheitsnetzteil bereitgestellt werden, in Gruppenanwesenheitsinformationen, die Informationen über die Erreichbarkeit der Multicast-Gruppe bereitstellen, und
- Empfangen vom Anwesenheitsnetzteil von Benutzeranwesenheitsinformationen in der Gruppenanwesenheitseinheitl zum Aktualisieren der Gruppenanwesenheitsinformationen und
- Empfangen vom Multicast-Server von Multicast-Informationen in der Gruppenanwesenheitseinheit zum Aktualisieren der Gruppenanwesenheitsinformationen und
**gekennzeichnet durch**
- Liefern der Gruppenanwesenheitsinformationen über die Multicast-Gruppe an den Multicast-Server zum Optimieren der Übertragung auf der ersten Protokollschicht **durch** Entscheiden, ob eine Multicast- oder eine Unicast-Übertragung an eine Mehrzahl von anwesenden Benutzern der Multicast-Gruppe verwendet werden soll,
- Liefern der Gruppenanwesenheitsinformationen über die Multicast-Gruppe an den Anwesenheitsnetzteil zum Optimieren von Anwesenheitsoperationen, die auf der zweiten Protokollschicht ausgeführt werden.

2. Verfahren nach Anspruch 1, **dadurch gekennzeichnet, dass** die Gruppenanwesenheitsinformationen Informationen in Bezug auf die Verfügbarkeit der Multicast-Gruppe umfassen.

3. Verfahren nach Anspruch 1 oder 2, **dadurch gekennzeichnet, dass** die Funktionalität der Gruppenanwesenheitseinheit unterteilt ist in eine erste Funktionalität, die für das Erzeugen und Sammeln der Gruppenanwesenheitsinformationen verantwortlich ist, und eine weitere Funktionalität, die die Gruppenanwesenheitsinformationen bereitstellt und verwaltet.

4. Verfahren nach einem der Ansprüche 1 bis 3, **dadurch gekennzeichnet, dass** eine Verbrauchereinheit der Gruppenanwesenheitsinformationen mit der Gruppenanwesenheitseinheit kommuniziert, um die Informationen zu verwenden.

5. Verfahren nach einem der vorhergehenden Ansprüche, **dadurch gekennzeichnet, dass** der Multicast-Server eine Verbrauchereinheit der Gruppenanwesenheitsinformationen ist.

6. Verfahren nach einem der Ansprüche 1 bis 4, **dadurch gekennzeichnet, dass** ein Benutzer, der durch einen Gruppenwächter registriert oder angemeldet wird, eine Verbrauchereinheit der Gruppenanwesenheitsinformationen ist.

7. Verfahren nach einem der Ansprüche 1 bis 6, **dadurch gekennzeichnet, dass** ein Multicast-Server die Gruppenanwesenheitseinheit für eine Multicast-Gruppe initiert.

8. Verfahren nach einem der Ansprüche 1 bis 6, **dadurch gekennzeichnet, dass** die Gruppenanwesenheitseinheit initiert wird und ihre Verfügbarkeit an die Benutzer verteilt wird.

9. Verfahren nach einem der Ansprüche 1 bis 8, **dadurch gekennzeichnet, dass** eine Aufenthaltsdatenbank der Benutzer mit der Gruppenanwesenheitseinheit kommuniziert, um genaue Aufenthaltsinformationen bereitzustellen.

10. Verfahren nach einem der Ansprüche 1 bis 9, **dadurch gekennzeichnet, dass** die Gruppenanwesenheitseinheit Zähler zum Verfolgen von Änderungen in den Gruppenanwesenheitsinformationen verwaltet.

11. Verfahren nach einem der Ansprüche 1 bis 10, **dadurch gekennzeichnet, dass** die folgenden Schritte ausgeführt werden:
- der Multicast-Server initiert die Gruppenanwesenheitseinheit,
- der Multicast-Server aktualisiert die Gruppenanwesenheitsinformationen durch Ändern der Gruppenanwesenheitsinformationen bei der Gruppenanwesenheitseinheit, wenn eine Anfrage eines Benutzers zum Ein- oder Austreten in eine oder aus einer Multicast-Gruppe erfolgt,
- die Gruppenanwesenheitseinheit registriert sich selbst bei einem Anwesenheitsagenten,
- die Verbrauchereinheit der Gruppenanwesenheitsinformationen registriert sich selbst beim Anwesenheitsagenten und abonniert die erforderlichen ereignisbasierten Informationen,
- der Anwesenheitsagent sendet Mitteilungen an die Gruppenanwesenheitseinheit und/oder die Verbrauchereinheit der Gruppenanwesenheit.

12. Gruppenanwesenheitseinheit, ausgelegt zum Integrieren von Benutzeranwesenheitsinformationen und Multicast-Informationen in einem Mobiltelekommunikationsnetz mit einem Multicast-Server, der eine Multicast-Übertragung auf der Basis von Multicast-Informationen an Benutzer bereitstellt, die bei einer Multicast-Gruppe registriert sind, wobei die Multicast-Übertragung auf einer ersten Protokollschicht durchgeführt wird und wobei die Multicast-Informationen Informationen über das Bestehen der Multicast-Gruppen und ihrer Benutzer umfassen, und mit einem Anwesenheitsnetzteil, der so ausgelegt ist, dass er eine Anwesenheitsoperation auf der Basis von Benutzeranwesenheitsinformationen ausführt, die Informationen umfassen, ob ein Benutzer Informationen senden und empfangen kann, wobei die Anwesenheitsoperation auf einer zweiten Protokollschicht ausgeführt wird, die eine Anwendungsschicht ist, wobei sich die Anwendungsschicht von der ersten Protokollschicht unterscheidet,
wobei die Gruppenanwesenheitseinheit Gruppenanwesenheitsinformationen über die Erreichbarkeit der Multicast-Gruppe bereitstellt und so ausgelegt ist, dass sie die Multicast-Informationen und die Benutzeranwesenheitsinformationen integriert
- mit einer ersten Schnittstelle, die so ausgelegt ist, dass sie Benutzeranwesenheitsinformationen vom Anwesenheitsnetzteil empfängt, und
- einer zweiten Schnittstelle, die so ausgelegt ist, dass sie Multicast-Informationen vom Multicast-Server empfängt, und
- Aktualisierungsmitteln, die so ausgelegt sind, dass sie die empfangenen Informationen verwenden, um die Gruppenanwesenheitsinformationen auf dem Laufenden zu halten, **dadurch gekennzeichnet, dass**
- die Gruppenanwesenheitseinheit so ausgelegt ist, dass sie die Gruppenanwesenheitsinformationen über die Multicast-Gruppe zum Optimieren der Übertragung auf der ersten Protokollschicht durch Entscheiden, ob eine Multicast- oder eine Unicast-Übertragung an eine Mehrzahl von anwesenden Benutzern der Multicast-Gruppe verwendet werden soll, an den Multicast-Server liefert, und
- wobei die Gruppenanwesenheitseinheit so ausgelegt ist, dass sie die Gruppenanwesenheitsinformationen über die Multicast-Gruppe zum Optimieren von Anwesenheitsoperationen, die auf der zweiten Protokollschicht ausgeführt werden, an den Anwesenheitsnetzteil liefert.

13. Gruppenanwesenheitseinheit nach Anspruch 12, **dadurch gekennzeichnet, dass** die Gruppenanwesenheitseinheit eine erste Instanz zum Erzeugen und Sammeln von Gruppenanwesenheitsinformationen und eine weitere Instanz zum Bereitstellen und Verwalten der Gruppenanwesenheitsinforationen aufweist.

14. Gruppenanwesenheitseinheit nach Anspruch 12 oder 13, **dadurch gekennzeichnet, dass** sich die erste und die weitere Instanz entweder in einem gleichen Netzknoten oder in verschiedenen Netzknoten befinden.

## Revendications

1. Procédé d'intégration d'une information de présence d'utilisateur et d'une information de multidiffusion dans un réseau de télécommunication mobile comportant un serveur de multidiffusion fournissant une transmission multidiffusée sur la base d'une information de multidiffusion aux utilisateurs enregistrés dans un groupe de multidiffusion, dans lequel la transmission multidiffusée est effectuée sur une première couche de protocole et dans lequel l'information de multidiffusion comprend une information concernant l'existence des groupes de multidiffusion et leurs utilisateurs et comportant un sous-système Réseau de présence pour effectuer une opération de présence sur la base d'une information de présence d'utilisateur, comprenant une information de ce que un utilisateur peut émettre ou recevoir une information, dans lequel l'opération de présence est exécutée sur une seconde couche de protocole, qui est une couche d'application, moyennant quoi la couche d'application est différente de la première couche de protocole,
- intégrer dans une unité de présentation au groupe l'information de multidiffusion fournie par le serveur de multidiffusion et l'information de présence d'utilisateur fournie par le sous-système Réseau de présence à l'information de présence dans le groupe fournissant une information concernant l'atteignabilité du groupe de multidiffusion et
- recevoir en provenance du sous-système Réseau de présence une information de présence d'utilisateur dans l'unité de présentation au groupe pour mettre à jour l'information de présence dans le groupe et
- recevoir en provenance du serveur de multidiffusion une information de multidiffusion dans l'unité de présentation au groupe pour mettre à jour l'information de présence dans le groupe et
**caractérisé par** l'étape consistant à
- fournir l'information de présence dans le groupe concernant le groupe de multidiffusion au serveur de multidiffusion pour optimiser la transmission multidiffusée sur la première couche de protocole en décidant d'utiliser une transmission multidiffusée ou monodiffusée vers une pluralité d'utilisateurs actuels du groupe de multidiffusion et
- fournir l'information de présence dans le groupe concernant le groupe de multidiffusion au sous-système Réseau de présence pour optimiser les opérations de présence exécutées sur la seconde couche de protocole.

2. Procédé selon la revendication 1, **caractérisé en ce que** l'information de présence dans le groupe inclut une information relative à la disponibilité du groupe de multidiffusion.

3. Procédé selon la revendication 1 ou 2, **caractérisé en ce que** la fonctionnalité de l'unité de présentation au groupe est subdivisée en une première fonctionnalité en charge de produire et collecter l'information de présence dans le groupe et en une autre fonctionnalité fournissant et administrant l'information de présence dans le groupe.

4. Procédé selon une des revendications 1 à 3, **caractérisé en ce que** une unité consommatrice de l'information de présence dans le groupe communique avec l'unité de présentation au groupe afin d'utiliser ladite information.

5. Procédé selon une des revendications précédentes, **caractérisé en ce que** le serveur de multidiffusion est une unité consommatrice de l'information de présence dans le groupe.

6. Procédé selon une des revendications 1 à 4, **caractérisé en ce que** un utilisateur qui s'est enregistré et abonné au moyen d'un observateur de groupe est une unité consommatrice de l'information de présence dans le groupe.

7. Procédé selon une des revendications 1 à 6, **caractérisé en ce que** un serveur de multidiffusion lance l'unité de présentation au groupe pour un groupe de multidiffusion.

8. Procédé selon une des revendications 1 à 6, **caractérisé en ce que** l'unité de présentation au groupe est lancée et sa disponibilité est répartie aux utilisateurs.

9. Procédé selon une des revendications 1 à 8, **caractérisé en ce que** une base de données de position des utilisateurs communique avec l'unité de présentation au groupe afin de fournir une information de position précise.

10. Procédé selon une des revendications 1 à 9, **caractérisé en ce que** l'unité de présentation au groupe administre les compteurs pour garder la trace des changements de l'information de présence dans le groupe.

11. Procédé selon une des revendications 1 à 10, **caractérisé en ce que** les étapes suivantes sont exécutées :
- le serveur de multidiffusion lance l'unité de présentation au groupe,
- le serveur de multidiffusion met à jour l'information de présence dans le groupe en modifiant l'information de présence dans le groupe au niveau de l'unité de présentation au groupe quand une demande pour le rejoindre ou le quitter émanant d'un utilisateur vers ou depuis un groupe de multidiffusion est exécutée,
- l'unité de présentation au groupe s'enregistre elle-même au niveau d'un agent de présence,
- l'unité consommatrice de l'information de présence dans le groupe s'enregistre elle-même au niveau de l'agent de présence et s'abonne à l'information basée sur les évènements requise,
- l'agent de présence envoie des notifications à l'unité de présentation au groupe et/ou au consommateur de la présence dans le groupe.

12. Unité de présentation au groupe adaptée afin d'intégrer l'information de présence d'utilisateur et l'information de multidiffusion dans un réseau de télécommunication mobile fournissant une transmission multidiffusée sur la base d'une information de multidiffusion aux utilisateurs enregistrés dans un groupe de multidiffusion, dans lequel la transmission multidiffusée est effectuée sur une première couche de protocole et dans lequel l'information de multidiffusion comprend une information concernant l'existence des groupes de multidiffusion et leurs utilisateurs et comportant un sous-système Réseau de présence pour effectuer une opération de présence sur la base d'une information de présence d'utilisateur, comprenant une information de ce que un utilisateur peut émettre ou recevoir une information, dans lequel l'opération de présence est exécutée sur une seconde couche de protocole, qui est une couche d'application, moyennant quoi la couche d'application est différente de la première couche de protocole,
l'unité de présentation au groupe fournissant l'information de présence au groupe en ce qui concerne l'atteignabilité du groupe de multidiffusion et étant adaptée afin d'intégrer l'information de multidiffusion et l'information de présence d'utilisateur avec
- une première interface adaptée afin de recevoir une information de présence d'utilisateur provenant du sous-système Réseau de présence et
- une seconde interface adaptée afin de recevoir une information de multidiffusion provenant du serveur de multidiffusion et
- un moyen de mise à jour adapté afin d'utiliser l'information reçue pour garder mise à jour l'information de présence dans le groupe,
**caractérisé en ce que**
- ladite unité de présentation au groupe est adaptée afin de fournir l'information de présence dans le groupe concernant le groupe de multidiffusion au serveur de multidiffusion pour optimiser la transmission sur la première couche de protocole en décidant d'utiliser une transmission multidiffusée ou monodiffusée vers une pluralité d'utilisateurs du groupe de multidiffusion et
- moyennant quoi ladite unité de présentation au groupe est adaptée afin de fournir l'information de présence dans le groupe concernant le groupe de multidiffusion au sous-système Réseau de présence pour optimiser les opérations de présence exécutées sur la seconde couche de protocole.

13. Unité de présentation au groupe selon la revendication 12, **caractérisé en ce que** ladite unité de présentation au groupe comporte une première entité pour produire et collecter l'information de présence dans le groupe et une autre entité pour fournir et administrer l'information de présence dans le groupe.

14. Unité de présentation au groupe selon la revendication 12 ou 13, **caractérisée en ce que** la première et l'autre entité sont soit situées dans un même noeud de réseau, soit dans des noeuds de réseau différents.
